# EUROPÄISCHE PATENTSCHRIFT

(11) **EP 2 711 246 B1**
(45) Veröffentlichungstag und Bekanntmachung des Hinweises auf die Patenterteilung: **12.08.2015**
(21) Anmeldenummer: 13004638.6
(22) Anmeldetag: 25.09.2013
(51) Int. Cl.: B60K 37/04, B60R 11/02

(54) **In einer Instrumententafel integrierter Halter für mobile Geräte**
Holder for mobile devices integrated into a dashboard
Support pour appareils mobiles intégré dans un tableau de bord

(30) Priorität: 25.09.2012 DE 102012018827
(43) Veröffentlichungstag der Anmeldung: 26.03.2014
(73) Patentinhaber: IAV GmbH Ingenieurgesellschaft Auto und Verkehr, 10587 Berlin (DE)
(72) Erfinder: Müller-Bagehl, Christian, D-12247 Berlin (DE); Friedrich, Ingo, D-29308 Winsen/Aller (DE)
(74) Vertreter: Fukala, Georg

(56) Entgegenhaltungen:
- DE-U1-202010 015 867
- FR-A1- 2 939 998

## Beschreibung

### Technisches Gebiet

Die vorliegende Erfindung betrifft einen in einer Instrumententafel integrierten Halter für mobile Geräte zum Einsatz in Fahrzeugen.

### Stand der Technik

Aus dem Stand der Technik ist eine Vielzahl verschiedener Halter zur Befestigung und Positionierung mobiler Geräte in einem Kraftfahrzeug bekannt. Es sind verschiedene Halter vorgesehen, um verschiedene mobile Geräte an verschiedenen Stellen in Kraftfahrzeugen zu befestigen beziehungsweise zu positionieren. Durch die Weiterentwicklungen der mobilen Geräte nehmen die Abmessungen und Gewichte zu. Der Positionierung der mobilen Geräte im Kraftfahrzeug sind im Hinblick auf die Sichtbeeinträchtigung des Fahrers, die Bedienerfreundlichkeit, die Ablesbarkeit und den Komfort Grenzen gesetzt. Deshalb werden zunehmend Halter verwendet, welche zur Positionierung der mobilen Geräte im Bereich der Instrumententafel geeignet sind.

Aus der DE 10 2006 051 037 A1 ist eine Halterung für Ablageteile im Innenraum eines Kraftfahrzeuges bekannt, welche durch einen einfachen und unkomplizierten Aufbau sowie durch eine gute Haptik gekennzeichnet ist und sich bei Nichtbenutzung in einem eingeschobenen Zustand befindet. Die Halterung besteht aus einer als Frontteil ausgebildeten Dekorleiste, einem daran angeordneten Boden und beiderseits an den Innenseiten des Frontteils angeordneten Hohlprofilen. Die Hohlprofile wiederum sind in Führungen in einem Armaturenbrett oder in Seitentüren verschiebbar gelagert. Dabei ist an der Halterung eine Feder angeordnet, so dass durch die Federkraft die Halterung stets in Richtung Armaturenbrett beziehungsweise in Richtung Seitentür verschoben wird.

Aus der DE 10 2011 008 770 A1 geht eine Vorrichtung hervor, mit der ein Fahrerinformations- und Kommunikationssystem in besonders einfacher und sicherer Weise in ein Cockpit eines Fahrzeuges integriert werden kann. Die Integration des Fahrerinformations- und Kommunikationssystems erfolgt über eine Andockstation in einem Gehäuse, an der zumindest die Energieversorgung für das Fahrerinformations- und Kommunikationssystem vorgesehen ist. Weiterhin können Verbindungen zum Zweck des Informationsaustausches zwischen dem Fahrerinformations- und Kommunikationssystem und dem Fahrzeug, dem Fahrer oder Beifahrer vorgesehen werden. Die Andockstation ist als Tablett ausgeführt und derart drehbar im Cockpit angeordnet, dass jeweils eine erste Seite oder eine zweite Seite der Andockstation in eine Ebene mit der Vorderseite des Cockpits bringbar ist.

Die bisher bekannten Halter weisen jedoch keine zufriedenstellende Stabilität und Variabilität auf, um ein modernes mobiles Gerät sicher zu halten und gegebenenfalls auszurichten. Des Weiteren sind die herkömmlichen Halter so konzipiert, dass diese starr montiert sind. Werden die Halter nicht benötigt, wenn beispielsweise das mobile Gerät nicht im Halter aufgenommen werden soll, wird das Wohlbefinden der Fahrzeuginsassen durch den Anblick nichtbenutzter Halter gestört. Außerdem kann das Verletzungsrisiko durch unbenutzte Halter für die Fahrzeuginsassen erhöht werden.

Gemäß der FR 2 939 998 A1 ist ein Halter für mobile Geräte Stand der Technik, der in einer Instrumententafel integriert ist, wobei wenigstens zwei voneinander beabstandete Halterteile vorgesehen sind, die zur Befestigung und Positionierung eines mobilen Gerätes aus der Instrumententafel ausfahrbar sind.

### Aufgabe der Erfindung

Die Aufgabe der Erfindung besteht darin, einen in einer Instrumententafel integrierten Halter für mobile Geräte zum Einsatz in Fahrzeugen bereitzustellen, wobei die Anforderungen an Stabilität und Variabilität erfüllt werden. Wird der Halter nicht benutzt, soll das Wohlbefinden der Fahrzeuginsassen nicht gestört sowie das Verletzungsrisiko der Fahrzeiginsassen nicht erhöht werden.

### Lösung der Aufgabe

Die Aufgabe wird durch die Vorrichtung nach den Merkmalen des Patentanspruchs 1 gelöst.

### Beschreibung der Erfindung

Die Erfindung stellt eine Vorrichtung bereit, mit welcher ein mobiles Gerät in besonders stabiler und sicherer Weise an der Instrumententafel im Innenraum eines Fahrzeugs befestigt und positioniert werden kann.

Als mobile Geräte sind Fahrerinformations-, Kommunikations- und Multimediasysteme zu verstehen, welche eine Vielzahl von Funktionen zur Unterstützung des Fahrers oder der Fahrzeuginsassen und zur Unterhaltung des Fahrers oder der Fahrzeuginsassen bereitstellen können. Darunter sind verschiedene elektronische Geräte für den mobilen Einsatz, beispielsweise Navigationssysteme, Tablett-Computer, mobile Handcomputer, Mobiltelefone, Multimediaabspielgeräte oder Kombinationen daraus zu verstehen.

Die Befestigung der mobilen Geräte erfolgt über einen in der Instrumententafel des Fahrzeugs integrierten Halter, der zur Befestigung und zur Positionierung des mobilen Gerätes ausfahrbar ist. Dazu ist der Halter von einem eingefahrenen Zustand in einen ausgefahrenen Zustand überführbar. Im eingefahrenen Zustand ist der Halter in der Instrumententafel versteckt, so dass die Vorderseite des Halters und der Instrumententafel hauptsächlich eine gemeinsame Oberfläche bilden. Der Halter ist eingefahren, so dass kein Teil des Halters deutlich über der Oberfläche der Instrumententafel steht. Nur kleinere Elemente, welche die Betätigung des Halters unterstützen, können deutlich aus der Oberfläche vorstehen. Im ausgefahrenen Zustand sind Teile des Halters ausgefahren, um die Befestigung und Positionierung des mobilen Gerätes zu gewährleisten.

Der Halter ist aus wenigstens zwei separaten Halterteilen ausgeführt. Die separaten Halterteile sind an verschiedenen Stellen in der Instrumententafel des Fahrzeugs integriert, so dass das mobile Gerät an wenigstens zwei verschiedenen Stellen am Gehäuse mit den separaten Halterteilen verbunden werden kann. Die separaten Halterteile sind dabei derart zueinander beabstandet angeordnet, dass das mobile Gerät zwischen den separaten Halterteilen befestigt werden kann. Jedes der separaten Halterteile weist für die Befestigung und Positionierung des mobilen Gerätes eine Aufnahme auf. Die Aufnahmen sind so ausgebildet und an den separaten Halterteilen befestigt, dass das mobile Gerät an gegenüberliegenden Seiten am Gehäuse gehalten wird. Die Aufnahmen können hinsichtlich der Form des Gehäuses des mobilen Gerätes, welches befestigt werden soll, angepasst sein. Alternativ kann die Form der Aufnahmen universell gestaltet sein, so dass verschiedene mobile Geräte aufgenommen werden. Zusätzlich können Schoner in den Aufnahmen angebracht sein, um beim Kontakt zwischen den Aufnahmen und dem Gehäuse des mobilen Gerätes keine Beschädigungen am Gehäuse des mobilen Gerätes hervorzurufen. Erfindungsgemäß vorteilhaft ist wenigstens eine Aufnahme eines separaten Halterteils als elastische Lagerung ausgeführt, so dass sich das mobile Gerät innerhalb der Aufnahme elastisch bewegen kann. Damit kann sichergestellt werden, dass während der Bedienung oder Ausrichtung des mobilen Gerätes keine Beschädigungen am Gehäuse des mobilen Gerätes auftreten. Die Bewegungen des mobilen Gerätes werden bis zu einer durch die elastische Lagerung bestimmten Kraft beziehungsweise Auslenkung abgestützt.

Die Aufnahmen an den separaten Halterteilen sowie die separaten Halterteile selbst können mit wenigstens einer Blende versehen sein, so dass sich die separaten Halterteile im eingefahrenen Zustand möglichst unauffällig in der Instrumententafel integrieren. Dazu weisen die Blenden eine möglichst gleiche Oberfläche wie die Instrumententafel im Bereich des integrierten Halters auf. Die Blenden sind wenigstens im vorderen Bereich der Aufnahmen des jeweiligen separaten Halterteils vorgesehen. Auch an den Seiten der Aufnahmen und der separaten Halterteile können Blenden angebracht sein, um den Blick in das Innere der Instrumententafel oder der separaten Halterteile zu verhindern.

Die separaten Halterteile sind innerhalb der Instrumententafel derart miteinander verbunden, dass bei einer Betätigung eines der beiden Halterteile zum Ausfahren oder Einfahren das jeweils andere Halterteil mit betätigt wird. Jedes der separaten Halterteile kann vom Fahrzeuginsassen einzeln betätigt werden, da die jeweils anderen separaten Halterteile dann über entsprechende Verbindungen im Halter mit betätigt werden. Die Betätigung der separaten Halterteile kann dabei zeitlich synchron oder auch zeitlich aufeinanderfolgend realisiert sein. Die Verbindung der separaten Halterteile zur gemeinsamen Betätigung kann mechanisch oder elektromechanisch ausgeführt sein. Eine mechanische Verbindung der separaten Halterteile kann durch feste Verbindungen, wie Streben, oder durch bewegliche Verbindungen, wie Getriebe, erfolgen. Elektromechanische Verbindungen können derart ausgeführt sein, dass die Bewegung eines der separaten Halterteile erkannt wird und durch einen elektromechanischen Antrieb, wie einen Elektromotor, auf das weitere separate Halterteil übertragen wird.

Die Betätigung eines der separaten Halterteile durch einen Fahrzeuginsassen kann durch eine Handkraft oder durch einen Fremdantrieb erfolgen. Der Fremdantrieb kann in vorteilhafter Ausgestaltung als Elektromotor, aber auch als Hydraulik- oder Pneumatikantrieb erfolgen. Die Betätigung wird dabei durch ein von einem Fahrzeuginsassen ausgelöstes Signal eingeleitet.

Wenigstens eine Aufnahme eines separaten Halterteils verfügt über wenigstens ein Gelenk zur Ausrichtung des mobilen Gerätes. Das Gelenk verbindet demnach die Aufnahme mit dem zugeordneten separaten Halterteil, so dass die Aufnahme relativ zum separaten Halterteil und somit relativ zur Instrumententafel schwenkbar ist. Das Gelenk kann derart ausgeführt sein, dass die Aufnahme um wenigstens eine festgelegte Achse oder frei schwenkbar ist. In erfindungsgemäß vorteilhafter Weise ist das Gelenk als Kugelgelenk ausgeführt, um das mobile Gerät innerhalb der durch die separaten Halterteile vorgegebenen Grenzen frei zu schwenken.

Die Aufnahme wenigstens eines Halterteils kann im ausgefahrenen Zustand gegenüber der Aufnahme des anderen Halterteils hauptsächlich horizontal verschiebbar sein. Dazu ist eine Einrichtung zur Verbindung der Aufnahme mit dem zugeordneten Halterteil vorgesehen, welche eine hauptsächlich geradlinige Verschiebung der Aufnahme gegenüber dem Halterteil ermöglicht. Dadurch kann die Positionierung des mobilen Gerätes erfolgen, wobei der Abstand einer Seite des mobilen Gehäuses, welche mit der entsprechenden, hauptsächlich horizontal verschiebbaren Aufnahme in Kontakt steht, verändert wird. Das zugeordnete separate Halterteil muss sich dabei nicht in der Instrumententafel bewegen.

Erfindungsgemäß vorteilhaft ist wenigstens eine Aufnahme eines separaten Halterteils über ein Kugelgelenk mit dem zugeordneten Halterteil verbunden. Wenigstens eine Aufnahme eines weiteren separaten Halterteils ist mit einem Drehgelenk mit dem zugeordneten weiteren separaten Halterteil verbunden. Eine der beiden Aufnahmen der separaten Halterteile ist zudem über die hauptsächlich horizontal verschiebbare Einrichtung mit dem zugeordneten Halterteil verbunden. Dadurch kann jede Schwenkbewegung des mobilen Gerätes zumindest annähernd ausgeglichen werden, ohne dass das mobile Gerät aus einer Aufnahme herausrutscht.

Wenigstens ein separates Halterteil oder die mit dem separaten Halterteil verbundene Aufnahme ist im ausgefahrenen Zustand gegenüber der Aufnahme des weiteren separaten Halterteils schwenkbar, um den Abstand der gegenüberliegenden Aufnahmen zu verändern. Dadurch wird es erleichtert, das mobile Gerät zwischen den Aufnahmen an gegenüberliegenden Seiten des Gehäuses zu befestigen. Es wird das schwenkbare Halterteil beziehungsweise die schwenkbare Aufnahme gegenüber der gegenüberliegenden Aufnahme weggeschwenkt, so dass sich der Abstand zwischen den Aufnahmen vergrößert. Das mobile Gerät kann dann in einer der beiden Aufnahmen eingesetzt werden und das schwenkbare Halterteil beziehungsweise die schwenkbare Aufnahme wieder zurückgeschwenkt werden, so dass der Abstand wieder verringert wird und das mobile Gerät zwischen den gegenüberliegenden Aufnahmen eingeklemmt ist.

Weiterhin können die Gelenke zum Schwenken und Führungen zum Verschieben der Aufnahmen und / oder der separaten Halterteile arretierbar sein oder wenigstens eine Raststellung aufweisen. Dadurch kann die Befestigung und Positionierung des mobilen Gerätes deutlich vereinfacht werden. Mit dem Einsatz von Arretierungen und Rasterungen an wenigstens einem der beweglichen Elemente kann die Stabilität des Halters erhöht werden. Dadurch können auch Einstellungen einer bestimmten Positionierung beibehalten werden, wenn der Halter ein- und wieder ausgefahren wird.

Erfindungsgemäß vorteilhaft ist das erste Halterteil oberhalb des zweiten Halterteils angeordnet und das mobile Gerät ist durch die erste Aufnahme von oben und durch die zweite Aufnahme von unten gehalten. Aufgrund der Abstützung in der formschlüssigen unteren Aufnahme müssen daher nur geringe Haltekräfte aufgebracht werden. Alternativ oder zusätzlich zum oben beschriebenen Einklemmen des mobilen Gerätes durch Relativverschieben der Halterteile ist ein seitliches Einschieben des Gerätes möglich.

### Ausführungsbeispiel zur Integration eines Multimediagerätes im Cockpit

Beispielhaft wird hier eine Ausführung der erfindungsgemäßen Vorrichtung dargestellt. In den dazugehörigen Figuren zeigen:
**FIGUR 1****:** eine schematische Darstellung der mechanischen Ausführung des Halters (**2**),
**FIGUR 2****:** eine schematische Darstellung eines in einer Instrumententafel (**1**) integrierten Halters (**2**) in einem eingefahrenen Zustand,
**FIGUR 3****:** eine schematische Darstellung des in der Instrumententafel (**1**) integrierten Halters (**2**) in einem ausgefahrenen Zustand, und
**FIGUR 4****:** eine schematische Darstellung des in der Instrumententafel (**1**) integrierten Halters (**2**) im ausgefahrenen Zustand mit einem daran befestigten mobilen Gerät (**3**).

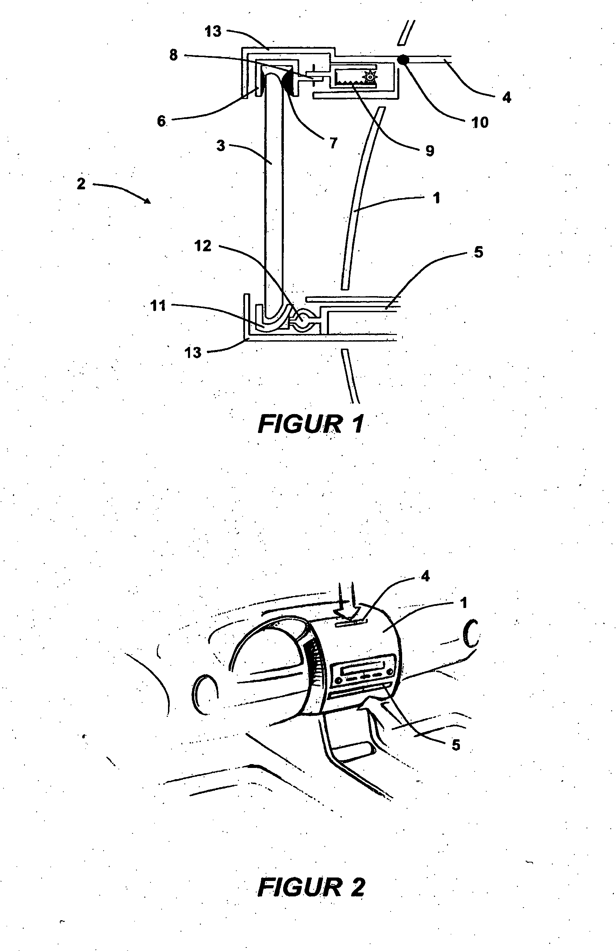

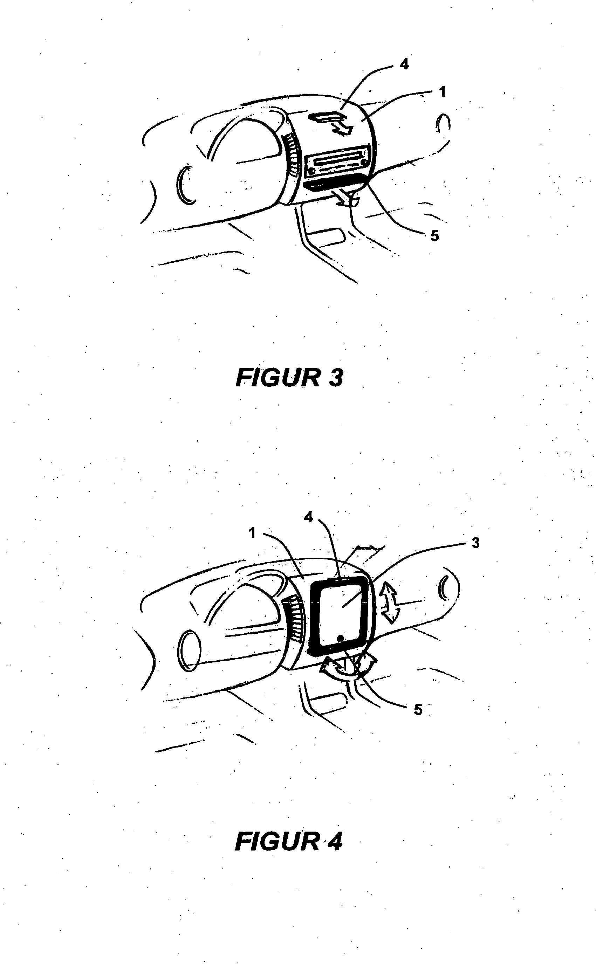

Das Ausführungsbeispiel des erfindungsgemäß vorteilhaften Halters (**2**) zur Befestigung und Positionierung des mobilen Gerätes (**3**), dargestellt in den **Figuren 1 bis 4**, besteht aus zwei separaten Halterteilen (**4, 5**), einem oberen ersten Halterteil (**4**) und einem unteren zweiten Halterteil **(5),** **FIGUR 1****.** Zur Befestigung des mobilen Gerätes (3) werden die zwei separaten Halterteile (**4, 5**), von einem eingefahrenen Zustand, dargestellt in **FIGUR 2**, in einen ausgefahrenen Zustand, dargestellt in FIGUR **3**, überführt. Die zwei separaten Halterteile (**4, 5**) sind dabei so in der Instrumententafel (**1**) integriert, dass diese ein- und ausfahrbar sind. Die separaten Halterteile (**4, 5**) sind unterschiedlich ausgeführt.

Am ersten Halterteil (**4**) ist eine erste Aufnahme (**6**) vorgesehen, welche über Schoner (**7**) für eine elastische Lagerung des mobilen Gerätes (**3**) verfügt. Durch die Schoner (**7**) wird die Gefahr einer Beschädigung des Gehäuses des mobilen Gerätes (**3**) bei der Positionierung und Benutzung verringert. Die erste Aufnahme (**6**) mit den Schonern (**7**) ist über ein Drehgelenk (**8**) mit einer Linearführung (**9**) verbunden. Die Linearführung (**9**) ist als Zahnstangengetriebe ausgeführt, wobei das Zahnrad, welches sich mit der Zahnstange in Eingriff befindet, gebremst wird. Die Linearführung (**9**) ist mit dem ersten Halterteil (**4**) verbunden. Weiterhin ist das erste Halterteil (**4**) mit einem Knickgelenk (**10**) zur einfachen Befestigung des mobilen Gerätes (**3**) ausgestattet. Über das Knickgelenk (**10**) ist das erste Halterteil (**4**) mit der ersten Aufnahme (**6**) gegenüber einer zweiten Aufnahme (**11**) des zweiten Halterteils (**5**) schwenkbar ausgeführt, so dass sich der Abstand zwischen der ersten und der zweiten Aufnahme **(6, 11**) verändert. Durch die Veränderung des Abstands der beiden Aufnahmen (**6,11**) zueinander, ist der Halter (**2**) an unterschiedliche mobile Geräte (**3**) anpassbar und es kann die Befestigung des mobilen Gerätes (**3**) realisiert werden. Wird die erste Aufnahme (**6**) gegenüber der zweiten Aufnahme (**11**) weggeschwenkt, kann das mobile Gerät (**3**) eingesetzt beziehungsweise entnommen werden. Wird die erste Aufnahme **(6)** gegenüber der zweiten Aufnahme (**11**) hingeschwenkt, wird das mobile Gerät (**3**) befestigt, sobald die erste Aufnahme (**6**) mit dem Gehäuse des mobilen Gerätes (**3**) im Eingriff steht.

Die zweite Aufnahme (**11**) des zweiten Halterteils (**5**) ist über ein Kugelgelenk (**12**) mit dem zweiten Halterteil (**5**) verbunden. Dadurch kann die zweite Aufnahme (**11**) frei geschwenkt werden. Die erste Aufnahme (**6**) gleicht dann die Bewegungen während der Positionierung oder Benutzung des mobilen Gerätes (**3**) durch die Schoner (**7**), das Drehgelenk (**8**) und die Linearführung (**9**) aus.

An beiden Aufnahmen (**6, 11**) sind Dekorrahmen (**13**) als Blenden vorgesehen, um den Aufnahmen (**6, 11**) ein zur Instrumententafel (**1**) passendes Aussehen zu verleihen, und den Blick in die Instrumententafel (**1**) sowie in die Mechanik des Halters (**2**) zu verdecken.

Die zwei separaten Halterteile (**4, 5**), sind an unterschiedlichen Stellen in der Instrumententafel (**1**) integriert, **FIGUR 2** **und** **3**, so dass das mobile Gerät (**3**) an gegenüberliegenden Stellen am Gehäuse befestigt werden kann, **FIGUR 4**. Die gegenüberliegenden Aufnahmen (**6, 11**) sind hinsichtlich des Kontakts mit dem mobilen Gerät (**3**) unterschiedlich ausgeführt. So wird das mobile Gerät (**3**) an der ersten Aufnahme (**6**) des oberen ersten Halterteils (**4**) nur in einem kleinen Bereich am Gehäuse des mobilen Gerätes (**3**) gehalten. Im Gegensatz dazu wird das mobile Gerät an der zweiten Aufnahme (**11**) des unteren, zweiten Halterteils (**5**) in einem vergleichbar größeren Bereich gehalten.

### Laufstellung der verwendeten Bezugszeichen

- 1: Instrumententafel
- 2: Halter
- 3: mobiles Gerät
- 4: erstes Halterteil
- 5: zweites Halterteil
- 6: erste Aufnahme
- 7: Schoner
- 8: Drehgelenk
- 9: Linearführung
- 10: Knickgelenk
- 11: zweite Aufnahme
- 12: Kugelgelenk
- 13: Dekorrahmen

## Patentansprüche

1. Instrumententafel **(1)** mit integriertem Halter **(2)** für mobile Geräte **(3),** wobei der Halter (2) aus wenigstens zwei voneinander beabstandeten Halterteilen (4, **5)** ausgeführt ist, welche zur Befestigung und Positionierung eines mobilen Gerätes (**3**) aus der Instrumententafel (**1**) ausfahrbar sind und jedes der Halterteile (**4, 5**) eine Aufnahme zur Befestigung des mobilen Gerätes (**3**) aufweist, **dadurch gekennzeichnet, dass** die Halterteile **(4, 5)** als separate Halterteile an verschiedenen Stellen in der Instrumententafel integriert sind.

2. Instrumententafel (1) nach Patentanspruch 1, **dadurch gekennzeichnet, dass** die zwei separaten Halterteile (**4, 5**) innerhalb der Instrumententafel (**1**) derart miteinander verbunden sind, dass bei einer Betätigung eines der beiden Halterteile (**4, 5**) zum Ausfahren oder Einfahren das jeweils andere Halterteil (**4, 5**) mit betätigt wird.

3. Instrumententafel **(1)** nach einem der vorherigen Ansprüche, **dadurch gekennzeichnet, dass** wenigstens eine Aufnahme (**6,11**) eines Halterteils (**4, 5**) über wenigstens ein Gelenk (**8, 9,10, 12**) zur Ausrichtung des mobilen Gerätes (**3**) verfügt.

4. Instrumententafel **(1)** nach einem der vorherigen Ansprüche, **dadurch gekennzeichnet, dass** die Aufnahme (**6, 11**) wenigstens eines Halterteils (4, 5) im ausgefahrenen Zustand gegenüber der Aufnahme (**6,11**) des anderen Halterteils (**4, 5**) hauptsächlich horizontal verschiebbar ist.

5. Instrumententafel **(1)** nach einem der vorherigen Ansprüche, **dadurch gekennzeichnet, dass** die Aufnahme **(6,11)** wenigstens eines Halterteils **(4, 5)** im ausgefahrenen Zustand gegenüber der Aufnahme **(6, 11**) des anderen Halterteils (**4, 5**) schwenkbar ist.

6. Instrumententafel (1) nach Patentanspruch 4 oder 5, **dadurch gekennzeichnet, dass** die Aufnahme (**6,11**) wenigstens eines Halterteils **(4, 5)** arretierbar ist oder eine Führung der Bewegung über wenigstens eine Raststellung verfügt.

7. Instrumententafel **(1)** nach einem der vorherigen Ansprüche, **dadurch gekennzeichnet, dass** wenigstens eine der Aufnahmen (**6, 11**) als elastische Lagerung ausgeführt ist.

8. Instrumententafel **(1)** nach einem der vorherigen Ansprüche, **dadurch gekennzeichnet, dass** es sich bei dem mobilen Gerät (**3**) um einen Tablett-Computer handelt.

9. Instrumententafel **(1)** nach einem der vorherigen Ansprüche, **dadurch gekennzeichnet, dass** das erste Halterteil (4) oberhalb des zweiten Halterteils (5) angeordnet ist und das mobile Gerät (3) durch die erste Aufnahme (6) von oben und durch die zweite Aufnahme (11) von unten gehalten wird.

## Claims

1. Dashboard (1) with an integrated holder (2) for mobile devices (3), wherein the holder (2) is formed from at least two spaced-apart holder parts (4, 5) which are extendible out of the dashboard (1) for the fastening and positioning of a mobile device (3), and each of the holder parts (4, 5) has a receptacle for the fastening of the mobile device (3), **characterized in that** the holder parts (4, 5) as separate holder parts are integrated at different points in the dashboard.

2. Dashboard (1) according to Patent Claim 1, **characterized in that** two separate holder parts (4, 5) are connected to each other within the dashboard (1) in such a manner that, when one of the two holder parts (4, 5) is actuated for extension or retraction purposes, the other holder part (4, 5) in each case is also actuated.

3. Dashboard (1) according to either of the preceding claims, **characterized in that** at least one receptacle (6, 11) of a holder part (4, 5) has at least one joint (8, 9, 10, 12) for the orientation of the mobile device (3).

4. Dashboard (1) according to one of the preceding claims, **characterized in that** the receptacle (6, 11) of at least one holder part (4, 5) is displaceable primarily horizontally, in the extended state in relation to the receptacle (6, 11) of the other holder part (4, 5).

5. Dashboard (1) according to one of the preceding claims, **characterized in that** the receptacle (6, 11) of at least one holder part (4, 5) is pivotable in the extended state in relation to the receptacle (6, 11) of the other holder part (4, 5).

6. Dashboard (1) according to Patent Claim 4 or 5, **characterized in that** the receptacle (6, 11) of at least one holder part (4, 5) is lockable or a guide of the movement has at least one matching position.

7. Dashboard (1) according to one of the preceding claims, **characterized in that** at least one of the receptacles (6, 11) is designed as an elastic mounting.

8. Dashboard (1) according to one of the preceding claims, **characterized in that** the mobile device (3) is a tablet computer.

9. Dashboard (1) according to one of the preceding claims, **characterized in that** the first holder part (4) is arranged above the second holder part (5) and the mobile device (3) is held from above by the first receptacle (6) and from below by the second receptacle (11).

## Revendications

1. Tableau de bord (1) comprenant un support intégré (2) pour appareils mobiles (3), le support (2) étant réalisé à partir d'au moins deux parties de support (4, 5) espacées l'une de l'autre qui, pour la fixation et le positionnement d'un appareil mobile (3), peuvent être sorties du tableau de bord (1), chacune des parties de support (4, 5) présentant un logement pour la fixation de l'appareil mobile (3), **caractérisé en ce que** les parties de support (4, 5) sont intégrées en différents endroits dans le tableau de bord sous forme de parties de support séparées.

2. Tableau de bord (1) selon la revendication 1, **caractérisé en ce que** les deux parties de support séparées (4, 5) sont connectées l'une à l'autre à l'intérieur du tableau de bord (1) de telle sorte que dans le cas d'un actionnement de l'une des deux parties de support (4, 5) en vue de sa sortie ou de son renfoncement, l'autre partie de support respective (4, 5) soit actionnée simultanément.

3. Tableau de bord (1) selon l'une quelconque des revendications précédentes, **caractérisé en ce qu'**au moins un logement (6, 11) d'une partie de support (4, 5) dispose d'au moins une articulation (8, 9, 10, 12) pour l'orientation de l'appareil mobile (3).

4. Tableau de bord (1) selon l'une quelconque des revendications précédentes, **caractérisé en ce que** le logement (6, 11) d'au moins une partie de support (4, 5) peut être déplacé principalement horizontalement dans l'état sorti par rapport au logement (6, 11) de l'autre partie de support (4, 5).

5. Tableau de bord (1) selon l'une quelconque des revendications précédentes, **caractérisé en ce que** le logement (6, 11) d'au moins une partie de support (4, 5) peut être pivoté dans l'état sorti par rapport au logement (6, 11) de l'autre partie de support (4, 5).

6. Tableau de bord (1) selon la revendication 4 ou 5, **caractérisé en ce que** le logement (6, 11) d'au moins une partie de support (4, 5) peut être bloqué ou un guide de mouvement dispose d'au moins une position d'encliquetage.

7. Tableau de bord (1) selon l'une quelconque des revendications précédentes, **caractérisé en ce qu'**au moins l'un des logements (6, 11) est réalisé sous forme de support sur palier élastique.

8. Tableau de bord (1) selon l'une quelconque des revendications précédentes, **caractérisé en ce que** l'appareil mobile (3) est une tablette informatique.

9. Tableau de bord (1) selon l'une quelconque des revendications précédentes, **caractérisé en ce que** la première partie de support (4) est disposée au-dessus de la deuxième partie de support (5) et l'appareil mobile (3) est retenu par le premier logement (6) par le haut et par le deuxième logement (11) par le bas.
